# NEUE EUROPÄISCHE PATENTSCHRIFT

(11) **EP 2 892 768 B2**
(45) Veröffentlichungstag und Bekanntmachung des Hinweises auf die Entscheidung über den Einspruch: **12.07.2023**
(45) Hinweis auf die Patenterteilung: 09.10.2019
(21) Anmeldenummer: 13730113.1
(22) Anmeldetag: 12.06.2013
(51) Int. Cl.: B60T 8/172, B60T 8/1761, B60T 8/18, B60T 8/26, B60T 8/32, B60T 10/00, B60T 10/02, B60T 13/58, B60T 13/66

(54) **VERFAHREN UND STEUEREINRICHTUNG ZUR STEUERUNG EINES ELEKTRONISCHEN BREMSSYSTEMS FÜR EIN FAHRZEUG**
METHOD AND CONTROL SYSTEM FOR CONTROLLING AN ELECTRONIC BRAKING SYSTEM IN A VEHICLE
PROCÉDÉ ET DISPOSITIF DE COMMANDE POUR LA COMMANDE D'UN SYSTÈME DE FREINAGE ÉLECTRONIQUE POUR UN VÉHICULE

(30) Priorität: 05.09.2012 DE 102012017518
(43) Veröffentlichungstag der Anmeldung: 15.07.2015
(73) Patentinhaber: ZF CV Systems Hannover GmbH, 30453 Hannover (DE)
(72) Erfinder: ECKERT, Horst, 31547 Rehburg-Loccum (DE); GAULKE, Arnd, 30974 Wennigsen (DE)
(74) Vertreter: Lüdtke, Thomas
(86) Internationale Anmeldenummer: PCT/EP2013/001736
(87) Internationale Veröffentlichungsnummer: WO 2014/037065

(56) Entgegenhaltungen:
- EP-A1- 0 974 505
- EP-A1- 1 291 258
- EP-A2- 0 860 337
- WO-A1-02/058978
- WO-A1-2007/012354
- DE-A1- 19 604 391
- DE-A1- 19 810 656
- DE-A1- 19 822 859
- DE-A1- 19 843 580
- DE-A1- 19 857 535
- DE-A1-102006 023 528
- DE-A1-102008 029 895
- DE-A1-102009 021 685
- DE-A1-102011 104 423
- DE-C1- 4 443 814
- US-A- 5 496 098
- Markus Wiedemann: "Bremssysteme (Nfz)" In: "Kraftfahrtechnisches Taschenbuch", 1 September 1995 (1995-09-01) pages 660-661, * , veröffentlicht vor dem Prioritätstag 05.09.2012 des Streitpatents; *

## Beschreibung

Die Erfindung betrifft ein Verfahren zur Steuerung eines elektronischen Bremssystems für ein Fahrzeug.

Elektronische Bremssysteme (EBS) in Nutzfahrzeugen können unterschiedliche Arten von Bremsen aufweisen. Die Bremswirkung wird dabei durch Betriebsbremsen, z.B. Reibungsbremsen (RB), und zusätzlich durch Dauerbremsen (DB), die z.B. als Retarder auf den Antriebsstrang zwischen einer Motor/Getriebe-Einheit und der Achse der angetriebenen Räder wirken, erreicht. Derartige Retarder werden herkömmlicherweise manuell über einen Hebel oder ein Pedal betätigt.

Zur Ansteuerung beider Bremsarten wird das EBS um ein weiteres Verfahren, die Dauerbremsintegration (DBI), erweitert, wodurch ein aufgenommener Fahrzeug-Soll-Verzögerungs-Wert auf beide Bremsarten im Bremssystem verteilt wird. Der Fahrzeug-Soll-Verzögerungs-Wert wird vorzugsweise durch den Fahrerwunsch vorgegeben, z.B. durch Betätigung des Bremspedals, und/oder durch ein automatisches Regelsystem zur selbsttätigen Ansteuerung des Bremssystems, z.B. eine adaptive Geschwindigkeitsregelung (ACC), eine Fahrdynamikregelung (ESP) oder einen Tempomaten (CC).

Die Dauerbremse dient in einem solchen Bremssystem dazu, eine Bremswirkung auf das Fahrzeug auszuüben, um den Verschleiß der Betriebsbremsen zu minimieren.

Bisherige DBI-Bremssysteme sehen vor, dass zunächst beide Bremsarten mit dem Fahrzeug-Soll-Verzögerungs-Wert von einer Steuereinrichtung angesteuert werden. Dabei reagiert die Betriebsbremse in der Regel schneller. Die Dauerbremse baut gemäß dem Fahrzeug-Soll-Verzögerungs-Wert ein Bremsmoment auf, und eine Dauerbrems-Steuereinrichtung (DB-ECU) übermittelt anschließend einen entsprechenden Dauerbrems-Ist-Moment-Wert an die Steuereinrichtung des EBS. Die Steuereinrichtung des EBS ermittelt aus dem übermittelten Dauerbrems-Ist-Moment-Wert einen Dauerbrems-Ist-Verzögerungs-Wert und verringert entsprechend einen Betriebsbrems-Soll-Verzögerungs-Wert, mit dem eine Betriebsbrems-Steuereinrichtung angesteuert wird. Die Bremswirkung beider Bremsarten wird dabei derart aufeinander abgestimmt, dass beide Bremsarten zusammen den Fahrzeug-Soll-Verzögerungs-Wert erbringen.

In DE 198 32 875 A1 ist ein Verfahren zur Steuerung eines DBI-Bremssystems beschrieben, wobei eine Betriebsbremse und eine Dauerbremse aufeinander abgestimmt angesteuert werden. Die Dauerbremse wird bei jedem Bremsvorgang aktiviert und abhängig vom Bremswunsch des Fahrers angesteuert. Die Bremswirkung der Dauerbremse wird weiterhin von der Steuereinrichtung überwacht, um die Signale zur Ansteuerung der Betriebsbremse und der Dauerbremse aufeinander abzustimmen.

Nachteilig bei solchen DBI-Bremssystemen ist, dass der Dauerbrems-Ist-Moment-Wert, den die Dauerbrems-Steuereinrichtung an die Steuereinrichtung des EBS übermittelt, nicht dem tatsächlichen Dauerbrems-Ist-Moment entspricht. Dadurch kommt es zu Abweichungen bei der Ermittlung des Betriebsbrems-Soll-Verzögerungs-Wertes bzw. eines Betriebsbrems-Soll-Drucks, der an die Betriebsbremsen übertragen wird, was zu einem Über- und Untersteuern des Fahrzeugs führt. Das hat zur Folge, dass Unstetigkeiten im Bremsverhalten entstehen, was vom Fahrer des Fahrzeugs negativ wahrgenommen wird; der Bremskomfort sinkt.

Der Erfindung liegt daher die Aufgabe zugrunde, ein Verfahren und eine Steuereinrichtung zur Steuerung eines elektronischen Bremssystems für ein Fahrzeug mit mindestens einer Betriebsbremse und einer Dauerbremse zu Die EP0974505A1 beschreibt ein Verfahren zur Steuerung der Bremsanlage eines Fahrzeugs mit einer steuerbaren Betriebs- und Dauerbremse, wobei die Betriebs- und Dauerbremse aufeinander abgestimmt angesteuert werden.

Die DE19604391A1 beschreibt ein Verfahren und eine Vorrichtung zur Steuerung des Bremsanlage eines Fahrzeugs, welche eine Betriebsbremse und einer Dauerbremse aufweist, wobei bei der elektrisch gesteuerten Einstellung der Betriebsbremse das Bremsverhalten der Dauerbremse berücksichtigt wird.

Die DE102011104423A1 beschreibt ein Verfahren zum Betreiben einer Dauerbremse eines Kraftfahrzeugs, bei welchem wenigstens eine Differenz zwischen einem vorgebbaren Sollbremsmoment von der Dauerbremse bereitgestellten Istbremsmoment ermittelt wird, wobei die Differenz in Abhängigkeit von einem ein über eine Abtriebswelle eines Motors zum Antreiben des Kraftfahrzeuges bereitgestellten Motormoment charakterisierenden Signal ermittelt wird.

Die DE102009021685A1 beschreibt ein Verfahren zum Steuern eines Bremssystems eines Fahrzeuges, wobei das Fahrzeug wenigstens einen Motor, eine Betriebsbremse und eine Dauerbremse aufweist, bei dem zur Bestimmung des Bremswirkung der Dauerbremse zumindest während eines Beschleunigungsphase des Fahrzeugs eine Differenzschlupf-Antriebskraft-Korrelationsgröße bestimmt wird, und zumindest während einer Bremsbetätigungsphase eine die von der Dauerbremse erbrachte Bremskraft angebende Dauerbremskraftgröße unter Verwendung des bei der Abbremsung auftretenden Differenzschlupfes, der Differenzschlupf-Antriebskraft-Korrelationsgröße sowie den von der Betriebsbremse des Fahrzeugs erbrachten Bremskraftanteilen bestimmt wird. schaffen, das einen hohen Bremskomfort bei hoher Sicherheit des Fahrzeugs ermöglicht.

Diese Aufgabe wird durch ein Verfahren nach Anspruch 1 gelöst. Die Unteransprüche beschreiben bevorzugte Weiterbildungen.

Somit sind ein herkömmliches elektronisches Bremssystem mit DBI-Funktion, das mindestens eine Betriebsbremse, z.B. eine Reibungsbremse aufweist, und eine z.B. als Retarder ausgeführte Dauerbremse vorgesehen, die einen Antriebsstrang zwischen zumindest einer angetriebenen Achse und einem Motor abbremst.

Zur Abstimmung der Bremsmomente, die von der mindestens einen Betriebsbremse und mindestens einen Dauerbremse zur Umsetzung des Fahrzeug-Soll-Verzögerungs-Wertes erzeugt werden, wird nach Aufbau eines Bremsmomentes durch die Dauerbremse zunächst ein entsprechender Dauerbrems-Ist-Moment-Wert von einer Dauerbrems-Steuereinrichtung (DB-ECU) an eine Steuereinrichtung des EBS übermittelt.

Da der übertragene Dauerbrems-Ist-Moment-Wert, z.B. durch eine fehlerhafte Bestimmung des Wertes in der DB-ECU, nicht dem tatsächlichen Dauerbrems-Ist-Moment entspricht, wird dieser beispielsweise in der Steuereinrichtung des EBS, vorzugsweise in einer Korrektureinrichtung mit einer gespeicherten Korrekturfunktion, die geschwindigkeitsabhängige Korrekturfaktoren enthält, korrigiert. Die Korrekturfunktion ist dabei eine für jede Dauerbremse typische Funktion, die durch die Korrektureinrichtung automatisch während einer oder mehrerer Bremsungen bestimmt und gespeichert werden kann.

Eine Korrektur wird dabei erfindungsgemäß geschwindigkeitsabhängig z.B. durch eine Multiplikation des Dauerbrems-Ist-Moment-Wertes mit der Korrekturfunktion zu einem korrigierten Dauerbrems-Ist-Moment-Wert durchgeführt. Aus dem korrigierten Wert wird anschließend in der Steuereinrichtung des EBS unter Einbeziehung der Fahrzeug-Masse ein korrigierter Dauerbrems-Ist-Verzögerungs-Wert ermittelt.

Alternativ hierzu ist vorgesehen, in der Steuereinrichtung des EBS zunächst einen unkorrigierten Dauerbrems-Ist-Verzögerungs-Wert aus dem unkorrigierten Dauerbrems-Ist-Moment-Wert und der Fahrzeug-Masse zu bestimmen und diesen ermittelten Wert dann mit der Korrekturfunktion in der Korrektureinrichtung zu einem korrigierten Dauerbrems-Ist-Verzögerungs-Wert zu korrigieren.

In beiden Fällen wird der korrigierte Dauerbrems-Ist-Verzögerungs-Wert zur weiteren Verwendung im Verfahren ermittelt. Dieser Wert wird dabei vorzugsweise in einer ersten Umrechnungseinheit in der Steuereinrichtung des EBS bestimmt.

Basierend auf dem korrigierten Dauerbrems-Ist-Verzögerungs-Wert wird anschließend in der Steuereinrichtung des EBS, vorzugsweise in einer zweiten Umrechnungseinheit, ein Betriebsbrems-Soll-Verzögerungs-Wert bestimmt und an die mindestens eine Betriebsbremse übertragen. Der Betriebsbrems-Soll-Verzögerungs-Wert kann von einer Betriebsbrems-Steuereinrichtung, die entweder intern in der Steuereinrichtung des EBS integriert oder extern angeordnet ist, bremsdruckniveau- und achslastgeregelt auf die Betriebsbremsen des Fahrzeugs verteilt werden.

Vorteil des erfindungsgemäßen Verfahrens ist, dass die Fahrzeug-Verzögerungs-Wirkungen der mindestens einen Betriebsbremse und der Dauerbremse im Bremssystem aufeinander abgestimmt werden. Insbesondere wird der Betriebsbrems-Soll-Verzögerungs-Wert bei einer Bremsung durch die Korrekturfunktion zuverlässig ermittelt und das Bremssystem entsprechend eingestellt.

Durch die zuverlässige Bestimmung des Betriebsbrems-Soll-Verzögerungs-Wertes durch die Korrektur- und Steuereinrichtung des EBS wird bei Bremsungen ein zeitabhängig unstetes Verhalten der Verzögerung des Fahrzeuges vermieden, das sonst für einen Fahrzeugführer als negativ wahrgenommen wird; der Bremskomfort steigt. Die Erfordernis aktiver Regelung der Fahrzeugverzögerungsregelung sinkt und die Genauigkeit und damit Aussagekraft des von der Fahrzeugverzögerungsregelung ermittelten Bremsdruckniveaus (BDN) steigt, was wiederum für weitere EBS-Funktionen, wie z.B. einer Anhängefahrzeugregelung, von Vorteil ist.

Zur Verwendung des erfindungsgemäßen Verfahrens ist weiterhin eine Steuereinrichtung des EBS vorgesehen, die mindestens eine Schnittstelle zur Ein- und Ausgabe von Signalen, eine Korrektureinrichtung zur Ermittlung der Korrekturfunktion und zur Berechnung und Ausgabe des korrigierten Dauerbrems-Ist-Moment- oder Dauerbrems-Ist-Verzögerungs-Wertes sowie eine Speichereinheit oder eine Speicherschnittstelle zur Aufnahme einer Speichereinheit aufweist. Die Korrektureinrichtung kann dabei entweder intern in der Steuereinrichtung des EBS integriert sein, oder extern angeordnet sein. Weiterhin sind vorzugsweise eine erste und eine zweite Umrechnungseinheit vorgesehen zur Berechnung des Dauerbrems-Ist-Verzögerungs-Wertes sowie des Betriebsbrems-Soll-Verzögerungs-Wertes.

Die Erfindung wird im Folgenden anhand der beiliegenden Zeichnungen an einigen Ausführungsformen erläutert. Es zeigen:
Fig. 1 eine Anordnung eines Bremssystems in einem Fahrzeug,
Fig. 2a, 2b eine Steuereinrichtung des EBS,
Fig. 3, 4 Flussdiagramme eines erfindungsgemäßen Verfahrens,
Fig. 5 eine Korrekturfunktion Kv(v_Fzg),

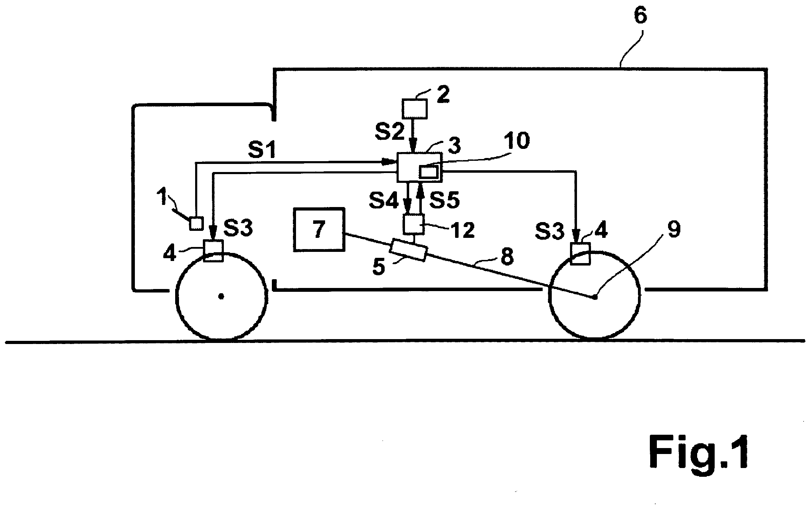

Das Fahrzeug 6, vorzugsweise ein Nutzfahrzeug, weist gemäß Figur 1 ein elektronisches Bremssystem (EBS) mit einer Steuereinrichtung 3 auf. Das Bremssystem ist geeignet zur Ansteuerung von zwei Arten von Bremsen, einer oder mehrerer Betriebsbremsen 4 sowie einer Dauerbremse 5. Eine Antriebswelle 8 verbindet einen Motor 7 mit einer Antriebsachse 9, wobei eine Dauerbremse 5, z.B. ein Retarder, zum Bremsen der Antriebswelle 8 vorgesehen ist. Eine Korrektureinrichtung 10 zur Steuerung des Bremssystems ist in Figur 1 in der Steuereinrichtung 3 des EBS integriert.

Der Fahrerwunsch wird durch ein Bremspedal 1 vorgegeben, woraus ein elektrisches Bremswunsch-Signal S1 und in der Steuereinrichtung 3 des EBS ein daraus folgender Fahrzeug-Soll-Verzögerungs-Wert z_soll ermittelt wird. Alternativ kann auch ein externes Regelsystem 2, wie z.B. eine adaptive Geschwindigkeitsregelung (ACC), eine Fahrdynamikregelung (ESP) oder ein Tempomat (CC) ein Bremswunsch-Signal S2 an die Steuereinrichtung 3 des EBS übergeben, die daraus den Fahrzeug-Soll-Verzögerungs-Wert z_soll ermittelt.

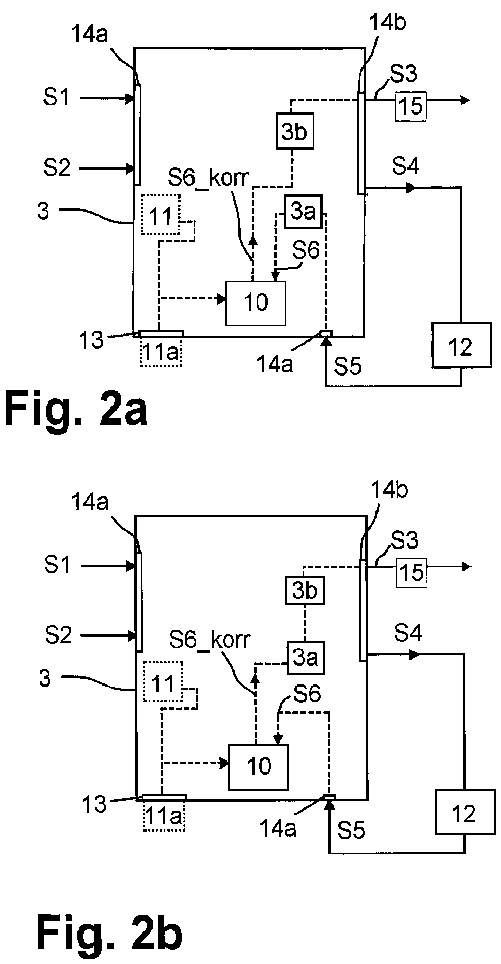

Gemäß Figur 2a und 2b überträgt die Steuereinrichtung 3 des EBS den aus dem Bremswunsch-Signal S1 bzw. S2 ermittelten Fahrzeug-Soll-Verzögerungs-Wert z_soll über ein Betriebsbrems-Signal S3 als ein Betriebsbrems-Soll-Verzögerungs-Wert zRB_soll an eine Betriebsbrems-Steuereinrichtung 15 und über ein Dauerbrems-Signal S4 als ein Dauerbrems-Soll-Verzögerungs-Wert zDBI_soll an eine Dauerbrems-Steuereinrichtung 12. Der Index DBI steht hierbei für Dauerbremse (bzw. Dauerbremsintegration) und RB für Reibungsbremse. Alternativ kann das Signal S4 auch ein Dauerbrems-Soll-Moment-Wert MDBI_soll sein, dass in der Steuereinrichtung 3 des EBS aus dem Fahrzeug-Soll-Verzögerungs-Wert z_soll ermittelt wurde.

In der Betriebsbrems-Steuereinrichtung 15 wird aus dem Betriebsbrems-Soll-Verzögerungs-Wert zRB_soll ein Betriebsbrems-Soll-Druck pRB_soll ermittelt und z.B. bremsdruckniveau- oder achslastgeregelt auf die mindestens eine Betriebsbremse 4 übertragen.

Weiterhin wird in der Dauerbrems-Steuereinrichtung 12 auf Grundlage des an der Dauerbremse 5 aufgebauten Bremsmoments ein Dauerbrems-Ist-Moment-Wert MDBI_ist ermittelt und über ein Dauerbrems-Ist-Moment-Signal S5 an die Steuereinrichtung 3 des EBS übermittelt.

In der Steuereinrichtung 3 wird das Dauerbrems-Ist-Moment-Signal S5 mit dem Dauerbrems-Ist-Moment-Wert MDBI_ist entweder direkt als ein Anfangs-Signal S6 an eine Korrektureinrichtung 10 übermittelt (s. Fig. 2b) oder es wird zunächst in einer ersten Umrechnungseinheit 3a umgerechnet (s. Fig. 2a) in einen Dauerbrems-Ist-Verzögerungs-Wert zDBI_ist, und dieser Dauerbrems-Ist-Verzögerungs-Wert zDBI_ist wird anschließend als Anfangs-Signal S6 an die Korrektureinrichtung 10 übergeben. Der Dauerbrems-Ist-Verzögerungs-Wert zDBI_ist entspricht dabei einer Fahrzeug-Ist-Verzögerung verursacht durch die Wirkung der Dauerbremse 5.

Die Korrektureinrichtung 10 entnimmt aus einer internen oder externen Speichereinheit 11,11a eine geschwindigkeitsabhängige Korrekturfunktion Kv. Die Korrektureinrichtung 10 korrigiert das Anfangs-Signal S6 mit dieser Korrekturfunktion Kv und gibt ein Korrektur-Signal S6_korr aus.

Für den Fall, dass mit dem Anfangs-Signal S6 der Dauerbrems-Ist-Verzögerungs-Wert zDBI_ist gemäß Figur 2a an die Korrektureinrichtung 10 übermittelt wurde, wird in der Steuereinrichtung 3 in einer zweiten Umrechnungseinheit 3b aus dem Korrektur-Signal S6_korr direkt ein Betriebsbrems-Soll-Verzögerungs-Wert zRB_soll = z_soll-Kv^{∗}zDB)_ist = z_soll - zDBI_ist_korr berechnet und an die Betriebsbrems-Steuereinrichtung 15 übertragen.

Falls das Dauerbrems-Ist-Moment-Signal S5 gemäß Figur 2b direkt als Anfangs-Signal S6 an die Korrektureinrichtung 10 übermittelt wurde, so wird das Korrektur-Signal S6_korr zunächst in der ersten Umrechnungseinheit 3a in einen korrigierten Dauerbrems-Ist-Verzögerungs-Wert zDBI_ist_korr umgerechnet und anschließend in der zweiten Umrechnungseinheit 3b der Betriebsbrems-Soll-Verzögerungs-Wert zRB_soll = z_soll-Kv^{∗}zDBI_ist = z_soll - zDBI_ist_korr bestimmt und an die Betriebsbrems-Steuereinrichtung 15 übergeben.

In der Betriebsbrems-Steuereinrichtung 15 wird aus dem Betriebsbrems-Soll-Verzögerungs-Wert zRB_soll ein Betriebsbrems-Soll-Druck pRB_soll ermittelt. Dabei kann vorzugsweise mit einem Bremsdruckniveau (BDN) einer Fahrzeug-Verzögerungs-Regelung eine fahrzeugmassenabhängige Bremsdruckniveau-Einstellung und in Abhängigkeit einer Differenzschlupfregelung (DSR) eine fahrzeugachslastabhängige Bremsdruckverteilung durchgeführt werden.

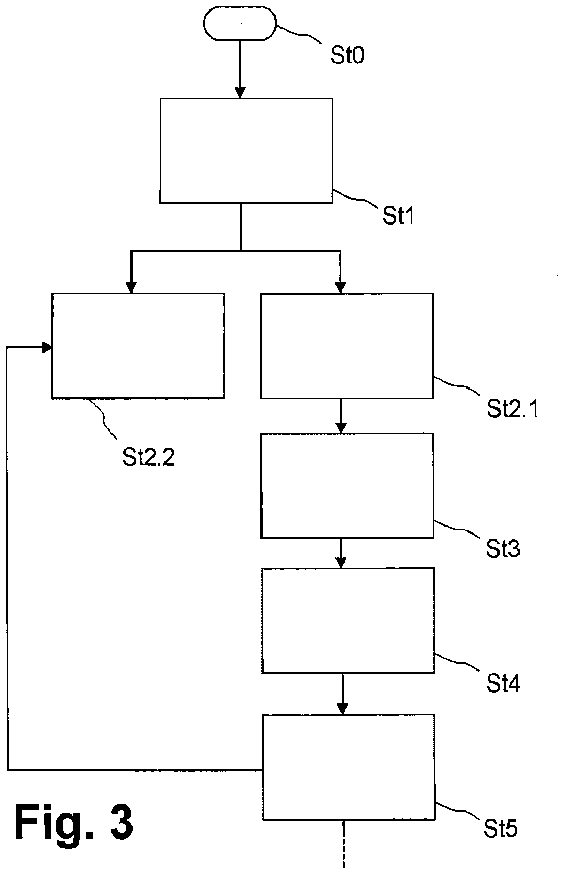

Daraus ergibt sich ein in Fig. 3 gezeigtes Flussdiagramm des erfindungsgemäßen Verfahrens mit den folgenden Schritten:
Schritt St0 startet das Verfahren vorzugsweise durch eine Initialisierung des EBS des Nutzfahrzeuges, z.B. durch eine Aktivierung der Fahrzeugzündung oder durch Einleiten einer Bremsung.
Im Schritt St1 wird in der Steuereinrichtung 3 des EBS ein Fahrzeug-Soll-Verzögerungs-Wert z_soll aus einem Bremswunsch-Signal S1 bzw. S2 ermittelt.
Gemäß Schritt St2.1 und St2.2 werden abhängig vom Fahrzeug-Soll-Verzögerungs-Wert z_soll das Betriebsbrems-Signal S3 an die Betriebsbrems-Steuereinrichtung 15 und das Dauerbrems-Signal S4 an die Dauerbrems-Steuereinrichtung 12 übertragen. An beiden Bremsen wird daraufhin ein Bremsmoment entsprechend den Betriebsbrems- bzw. Dauerbrems-Signalen S3 und S4 in gleichem Maße aufgebaut, wobei die Steuereinrichtungen 12,15 beider Bremsen 4,5 mit dem gleichen Fahrzeug-Soll-Verzögerungswert z_soll angesteuert werden. Beträgt beispielsweise der Fahrzeug-Soll-Verzögerungs-Wert z_soll = 20%g, so werden die jeweiligen Steuereinrichtungen 12,15 mit zRB_soll = 20%g bzw. zDBI_soll = 20%g angesteuert.
Gemäß Schritt St3 wird der Wert des Dauerbrems-Ist-Moments MDBI_ist von der Dauerbrems-Steuereinrichtung 12 als Dauerbrems-Ist-Moment-Signal S5 an die Steuereinrichtung 3 des EBS übermittelt. Anschließend wird in der Steuereinrichtung 3 des EBS entweder der Dauerbrems-Ist-Moment-Wert MDBI_ist direkt in einem Anfangs-Signal S6 an die Korrektureinrichtung 10 übermittelt oder zunächst ein Dauerbrems-Ist-Verzögerungs-Wert zDBI_ist in der ersten Umrechnungseinheit 3a ermittelt und dieser in dem Anfangs-Signal S6 an die Korrektureinrichtung 10 übertragen.
In Schritt St4 korrigiert die Korrektureinrichtung 10 das Anfangs-Signal S6 mit einer Korrekturfunktion Kv. Die Korrekturfunktion Kv wird von der Korrektureinrichtung 10 aus der internen oder externen Speichereinheit 11,11a eingelesen. Die Korrekturfunktion Kv ist dabei zusammengesetzt aus einer Anzahl n von Korrekturfaktoren Kf, die geschwindigkeitsabhängig ermittelbar sind. Außerdem ist sie abhängig von einem Abweichfaktor K = z_soll/(z_soll + Δz), wobei Δz = z_soll - z_ist während einer Bremsung mit einer bestimmten vordefinierten Abtastrate bestimmt wird; z_ist gibt dabei den Fahrzeug-Ist-Verzögerungs-Wert an.
Vorzugsweise wird das Korrektur-Signal S6_korr aus einer Multiplikation der Korrekturfunktion Kv mit dem Anfangs-Signal S6 bestimmt. Das Korrektur-Signal S6_korr kann zusätzlich in der internen oder externen Speichereinheit 11,11a zwischengespeichert werden.
Gemäß Schritt St5 ermittelt die Steuereinrichtung 3 aus dem in St4 bestimmten Korrektur-Signal S6_korr einen korrigierten Dauerbrems-Ist-Verzögerungs-Wert zDBI_ist_korr. Daraus wird in der zweiten Umrechnungseinheit 3b ein Betriebsbrems-Soll-Verzögerungs-Wert zRB_soll = z_soll-zDBI_korr bestimmt. Der Betriebsbrems-Soll-Verzögerungs-Wert zRB_soll wird anschließend an die Betriebsbrems-Steuereinrichtung 15 übermittelt. In der Betriebsbrems-Steuereinrichtung 15 wird aus dem Betriebsbrems-Soll-Verzögerungs-Wert zRB_soll und in Abhängigkeit des Bremsdruckniveaus BDN der Fahrzeug-Verzögerungs-Regelung sowie der adaptierten zwischenachsigen Bremsdruckverteilung der Differenzschlupf-Regelung DSR ein Betriebsbrems-Soll-Druck pRB_soll für die mindestens eine Betriebsbremse 4 bestimmt.

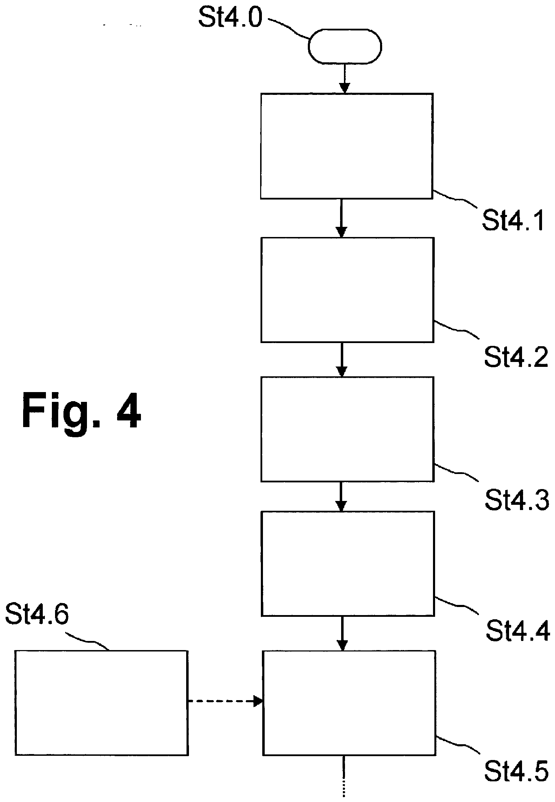

Die Korrekturfunktion Kv, wie sie in Schritt St4 benutzt wird, ist für jede Dauerbremse eine charakteristische Funktion, die von der Korrektureinrichtung 10 automatisch während einer Bremsung bestimmt werden kann. Figur 4 zeigt in Form eines Flussdiagramms den Ablauf für die automatische Ermittlung einer Korrekturfunktion Kv.

Die Ermittlung der Korrekturfunktion Kv wird in der Korrektureinrichtung 10 z.B. durch das Einleiten einer Bremsung bei St4.0 gestartet. Zu Beginn sind zunächst alle Korrekturfaktoren Kf auf 1,0 gesetzt, d.h. die Steuereinrichtung 3 ist so parametriert, dass die Korrektureinrichtung 10 die Dauerbrems-Ist-Verzögerungs-Werte zDBI_ist bei einer Bremsung mit einem Faktor 1 vorzugsweise multipliziert. Das heißt, zDBI_ist bleibt für alle Fahrzeug-Geschwindigkeiten v_Fzg unverändert; es findet keine Korrektur statt. Folglich wird also auch zRB_soll = z_soll - zDBI_ist_korr = z_soll - zDBI_ist nicht korrigiert.

Im ersten Schritt St4.1 wird die DBI-Funktion von der Steuereinrichtung 3 zunächst deaktiviert, d.h. die Dauerbremse 5 wird nicht von der Steuereinrichtung 3 gesteuert, eine Bremswirkung wird nur durch die mindestens eine Betriebsbremse 4 erreicht. Dadurch wird bei einer Bremsung zunächst nur die Wirkung der Betriebsbremse 4 analysiert, ohne dass die Dauerbremse 5 einen Einfluss hat.

Gemäß Schritt St4.2 werden während der Bremsung mit der mindestens einen Betriebsbremse 4 Adaptionswerte einer Fahrzeug-Verzögerungs-Regelung oder Bremsdruckniveau-Regelung und daraus ein mittlerer Bremsdruckniveau-Wert BDN für unterschiedliche Fahrzeug-Geschwindigkeiten v_Fzg ermittelt. Dieser Bremsdruckniveau-Wert BDN wird entweder in der Betriebsbrems-Steuereinrichtung 15, oder in der Steuereinrichtung 3 des EBS gespeichert.

Im nächsten Schritt St4.3 stellt die Steuereinrichtung 3 des EBS bzw. die Betriebsbrems-Steuereinrichtung 15 die Betriebsbremsen 4 auf den vorher ermittelten mittleren Bremsdruckniveau-Wert BDN fest ein und aktiviert die DBI-Funktion wieder. Dadurch erfolgt eine Bremsung mit der mindestens einen Betriebsbremse 4, die im Bremsdruckniveau-Wert BDN nicht mehr veränderbar ist, da durch die feste Einstellung des Bremsdruckniveau-Wertes BDN die fahrzeugverzögerungsregelnde Fahrzeugverzögerung geklemmt ist, und durch die Dauerbremse 5.

Im folgenden Schritt St4.4 werden bei Bremsungen mit der Dauerbremse 5 durch Vergleich des Fahrzeug-Ist-Verzögerungs-Wertes z_ist mit dem Fahrzeug-Soll-Verzögerungs-Wert z_soll Abweichungen der Verzögerung ermittelt, die von der Dauerbremse 5 verursacht worden sind. Aus auftretenden Abweichungen zwischen z_soll und z_ist werden Korrekturfaktoren Kf ermittelt, die diese Abweichungen kompensieren. Die Korrekturfaktoren Kf werden auf der Speichereinheit 11 der Steuereinrichtung 3 gespeichert. Die Abweichungen werden dabei bei unterschiedlichen Fahrzeug-Geschwindigkeiten v_Fzg bestimmt. Da für die Steuerung des Bremssystems die Korrekturfunktion Kv erforderlich ist, ist eine korrekte Bestimmung des Betriebsbrems-Soll-Verzögerungs-Wertes zRB_soll zur Erreichung des Zieles des Verfahrens, dass bei einer Bremsung z_ist gleich z_soll ist, erst dann gegeben, wenn die Korrekturfunktion Kv mit einer ausreichend hohen Genauigkeit bestimmt wurde. Die Genauigkeit kann dabei z.B. durch eine Anzahl n von zu bestimmenden Korrekturfaktoren Kf vorgegeben werden, um eine vorläufige Korrekturfunktion Kv zu erhalten. Eine weitere Verbesserung der Genauigkeit kann dann z.B. während weiterer Bremsungen erreicht werden, indem für weitere Fahrzeug-Geschwindigkeiten Korrekturfaktoren Kf bestimmt werden oder weitere Korrekturfaktoren Kf durch Interpolation ermittelt werden.

Aus diesen n Korrekturfaktoren Kf wird in St4.5 eine Korrekturfunktion Kv unter Berücksichtigung des Abweichfaktors K, der abhängig von der Differenz des Fahrzeug-Soll-Verzögerungs-Wertes z_soll und des Fahrzeug-Ist-Verzögerungs-Wertes z_ist ist, ermittelt und gespeichert. Der Abweichfaktor K wird während der Bremsung ebenfalls bestimmt und kann vorzugsweise auf der internen oder externen Speichereinheit 11,11a gespeichert werden. Bei der Ermittlung der Korrekturfunktion Kv(K,v_Fzg) können gemäß Schritt St4.6 weitere Zustandsgrößen einbezogen werden, um die Genauigkeit der Funktion zu erhöhen.

Abschließend kann die Korrekturfunktion Kv(K, v_Fzg) an die Korrektureinrichtung 10 zur Korrektur des Dauerbrems-Ist-Moment-Wertes MDBI_ist oder des Dauerbrems-Ist-Verzögerungs-Wertes zDBI_ist gemäß Figur 3, St4 übermittelt werden.

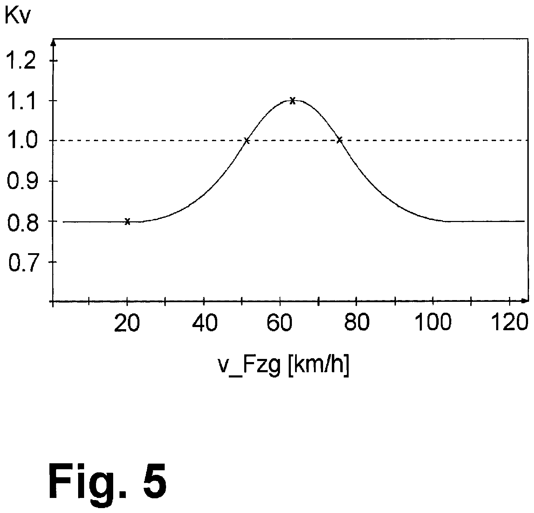

Figur 5 zeigt ein Beispiel einer geschwindigkeitsabhängigen Korrekturfunktion einer bestimmten Dauerbremse. Dargestellt ist, dass im Bereich von 10 km/h bis ca. 25 km/h die DB-ECU einen zu hohen Dauerbrems-Ist-Moment-Wert MDBI_ist ausgibt und durch die Korrekturfunktion Kv(K,v_Fzg) um einen Faktor Kf von 0.8 verringert werden muss. Im Folgenden wächst die Funktion und ab einem Wert von 50km/h ist das übermittelte Dauerbrems-Ist-Moment MDBI_ist zu niedrig und muss daher bei z.B. 65km/h mit einem Wert von 1.1 multipliziert werden. Im weiteren Verlauf fällt die Funktion wieder bis zu einer Geschwindigkeit von ca. 75km/h. Ab dieser Geschwindigkeit wird MDBI_ist durch Multiplikation mit Kv (K,v_Fzg) wieder erhöht. Als Folge der Korrektur wird auch der Betriebsbrems-Soll-Verzögerungs-Wert zRB_soll = z_soll - Kv(K,v_Fzg) ^{∗} zDBI_ist durch die Korrekturfunktion Kv dementsprechend angepasst.

### Bezugszeichenliste (Bestandteil der Beschreibung)

- 1: Bremspedal
- 2: ABS/CC/ACC/Tempomat/etc.
- 3: EBS-ECU
- 3a: erste Umrechnungseinheit
- 3b: zweite Umrechnungseinheit
- 4: Betriebsbremse (z.B. Reibbremse)
- 5: Dauerbremse (z.B. Retarder)
- 6: Fahrzeug
- 7: Motor
- 8: Antriebswelle
- 9: Antriebsachse
- 10: Korrektureinrichtung
- 11: interne Speichereinheit
- 11a: externe Speichereinheit
- 12: Dauerbrems-Steuereinrichtung
- 13: Schnittstelle Speichereinheit
- 14a: Eingabeschnittstelle
- 14b: Ausgabeschnittstelle
- 15: Betriebsbrems-Steuereinrichtung

Werte:
- z_soll: Fahrzeug-Soll-Verzögerung
- zRB_soll: Betriebsbrems-Soll-Verzögerung
- zDBI_soll: Dauerbrems-Soll-Verzögerung
- zRB_ist: Betriebsbrems-Ist-Verzögerung
- zDBI_ist: Dauerbrems-Ist-Verzögerung
- zDBI_ist_korr: korrigierte Dauerbrems-Ist-Verzögerung
- z_ist: Fahrzeug-Ist-Verzögerung
- MDBI_ist: Dauerbrems-Ist-Moment
- MDBI_ist_korr: korrigiertes Dauerbrems-Ist-Moment
- MDBI_soll: Dauerbrems-Soll-Moment
- pRB_soll: Betriebsbrems-Soll-Druck
- BDN: Bremsdruckniveau

- Δz: z_soll-z_ist
- Kv: Korrekturfunktion
- Kf: Korrekturfaktoren
- n: Anzahl von Korrekturfaktoren
- K: Abweichfaktor
- v_Fzg: Fahrzeuggeschwindigkeit
- i: Übersetzungsverhältnis
- µ: Reibwert
- ω: Winkelgeschwindigkeit
- m_Fzg: Masse Fahrzeug
- T: Bremsentemperatur

- S1: Bremswunschsignal (z_soll) vom Bremspedal
- S2: Bremswunschsignal (z_soll) vom ABS/CC/ACC/ Tempomat/etc.
- S3: Betriebsbrems-Signal
- S4: Dauerbrems-Signal
- S5: Dauerbrems-Ist-Moment-Signal
- S6: Anfangs-Signal
- S6_korr: Korrektur-Signal

## Patentansprüche

1. Verfahren zur Steuerung eines elektronischen Bremssystems in einem Fahrzeug (6), wobei das Bremssystem mindestens eine Betriebsbremse (4) und eine Dauerbremse (5) aufweist,
mit mindestens den folgenden Schritten:
- Ermitteln eines Fahrzeug-Soll-Verzögerungs-Werts (z_soll) (St1),
- Ansteuern der Dauerbremse (5) mit einem Dauerbrems-Signal (S4) (St2.1) und der mindestens einen Betriebsbremse (4) mit einem Betriebsbrems-Signal (S3) (St2.2) in Abhängigkeit des Fahrzeug-Soll-Verzögerungs-Werts (z_soll),
- Einlesen eines Dauerbrems-Ist-Moment-Signals (S5) der Dauerbremse (5) (St3) und Ermitteln eines Anfangs-Signals (S6),
**dadurch gekennzeichnet, dass**
aus dem Anfangs-Signal (S6) ein Korrektur-Signal (S6_korr) (St4) und aus dem Korrektur-Signal (S6_korr) ein Betriebsbrems-Soll-Verzögerungs-Wert (zRB_soll) ermittelt wird und mit dem Betriebsbrems-Soll-Verzögerungs-Wert (zRB_soll) die mindestens eine Betriebsbremse (4) über das Betriebsbrems-Signal (S3) angesteuert wird (St5),
wobei das Korrektur-Signal (S6_korr) aus dem Anfangs-Signal (S6) und einer Korrekturfunktion (Kv) bestimmt wird,
wobei das Anfangs-Signal (S6) einen Dauerbrems-Ist-Verzögerungs-Wert (zDBI_ist) oder einen Dauerbrems-Ist-Moment-Wert (MDBI_ist) übermittelt, und
das Korrektur-Signal (S6 korr) einen korrigierten Dauerbrems-Ist-Verzögerungs-Wert (zDBI ist korr) oder einen korrigierten Dauerbrems-Ist-Moment-Wert (MDBI ist korr) übermittelt, und
wobei die Korrekturfunktion (Kv) abhängig ist von einer Fahrzeuggeschwindigkeit (v_Fzg) und/oder einem Abweichfaktor (K), der die Differenz zwischen Fahrzeug-Soll-Verzögerungs-Wert (z_soll) und Fahrzeug-Ist-Verzögerungs-Wert (z_ist) beinhaltet.

2. Verfahren nach Anspruch 1, **dadurch gekennzeichnet, dass** aus dem Anfangs-Signal (S6) das Korrektur-Signal (S6_korr) ermittelt wird durch eine Multiplikation der Korrekturfunktion (Kv) mit dem Dauerbrems-Ist-Verzögerungs-Wert (zDBI_ist) oder dem Dauerbrems-Ist-Moment-Wert (MDBI_ist).

3. Verfahren nach Anspruch 2, **dadurch gekennzeichnet, dass** zur Ermittlung des korrigierten Dauerbrems-Ist-Verzögerungs-Wertes (zDB)_ist_korr) oder des Dauerbrems-Ist-Moment-Wertes (MDBI_ist korr) mindestens eine Fahrzeugmasse (m_Fzg) und/oder Übersetzungverhältnisse (i) einbezogen werden.

4. Verfahren nach einem der vorherigen Ansprüche, **dadurch gekennzeichnet, dass** die Korrekturfunktion (Kv) aus einem Fahrzeug-Ist-Verzögerungs-Wert (z ist) und dem Fahrzeug-Soll-Verzögerungs-Wert (z_soll) des Fahrzeugs (6) bestimmt wird, indem eine Abweichung in der Bremswirkung der Dauerbremse (5) bei einem Bremsvorgang einmalig und/oder kontinuierlich ermittelt und diese Abweichung in der Korrekturfunktion (Kv) gespeichert wird, wobei diese Abweichung durch die Korrekturfunktion (Kv) kompensiert wird.

5. Verfahren nach einem der vorherigen Ansprüche, **dadurch gekennzeichnet, dass** die Korrekturfunktion (Kv) aus einer Anzahl (n) von Korrekturfaktoren (Kf) interpoliert wird.

6. Verfahren nach einem der vorhergehenden Ansprüche, **dadurch gekennzeichnet, dass** zur Bestimmung des Betriebsbrems-Soll-Verzögerungs-Wertes (zRB_soll) mindestens eine Zustandsgröße einbezogen wird, die gewählt wird aus der Gruppe, die enthält:
eine Bremsentemperatur (T), einen Bremsdruck (p), eine Winkelgeschwindigkeit (ω), einen Reibwert (µ) der Reibungsbremse (4).

7. Verfahren nach einem der vorhergehenden Ansprüche, **dadurch gekennzeichnet, dass** der Fahrzeug-Soll-Verzögerungs-Wert (z_soll) durch Betätigung eines Bremspedals (1) vom Fahrer des Fahrzeugs (6) und/oder von einem Regelsystem (2) zur selbsttätigen Ansteuerung des Bremssystems vorgegeben wird.

8. Verfahren nach einem der vorhergehenden Ansprüche, **dadurch gekennzeichnet, dass** in einer Betriebsbrems-Steuereinrichtung (15) aus dem Betriebsbrems-Soll-Verzögerungs-Wert (zRB_soll) ein Betriebsbrems-Soll-Druck (pRB_soll) in Abhängigkeit einer Fahrzeug-Verzögerungs-Regelung und/oder einer Differenzschlupfregelung bestimmt und an die mindestens eine Betriebsbremse (4) übertragen wird.

## Claims

1. Method for controlling an electronic brake system in a vehicle (6), wherein the brake system has at least one service brake (4) and a sustained-action brake (5),
having at least the following steps:
- determining a vehicle setpoint deceleration value (z_soll) (St1),
- actuating the sustained-action brake (5) with a sustained-action brake signal (S4) (St2.1) and the at least one service brake (4) with a service-brake signal (S3) (St2.2) as a function of the vehicle setpoint deceleration value (z_soll),
- reading in a sustained-action brake actual torque signal (S5) of the sustained-action brake (5) (St3) and determining an initial signal (S6), **characterized in that**
a correction signal (S6_korr) (St4) is determined from the initial signal (S6), and a service-brake setpoint deceleration value (zRB soll) is determined from the correction signal (S6_korr), and the at least one service brake (4) is actuated (St5) with the service-brake setpoint deceleration value (zRB soll) by means of the service-brake signal (S3),
wherein the correction signal (S6 korr) is determined from the initial signal (S6) and a correction function (Kv),
wherein the initial signal (S6) transfers a sustained-action brake actual deceleration value (zDBI_ist) or a sustained-action brake actual torque value (MDBI ist), and
the correction signal (S6 korr) transfers a corrected sustained-action brake actual deceleration value (zDBI ist korr) or a corrected sustained-action brake actual torque value (MDBI ist korr), and
wherein the correction function (Kv) is dependent on a vehicle speed (v_Fzg) and/or a deviation factor (K) which includes the difference between the vehicle setpoint deceleration value (z soll) and the vehicle actual deceleration value (z_ist).

2. Method according to Claim 1, **characterized in that** the correction signal (S6 korr) is determined from the initial signal (S6) by multiplying the correction function (Kv) by the sustained-action brake actual deceleration value (zDBI ist) or the sustained-action brake actual torque value (MDBI_ist).

3. Method according to Claim 2, **characterized in that** at least one vehicle mass (m_Fzg) and/or transmission ratios (i) are included for determining the corrected sustained-action brake actual deceleration value (zDBI ist korr) or the sustained-action brake actual torque value (MDBI_ist_korr).

4. Method according to one of the preceding claims, **characterized in that** the correction function (Kv) is determined from a vehicle actual deceleration value (z_ist) and the vehicle setpoint deceleration value (z_soll) of the vehicle (6) by determining once and/or continuously a deviation in the braking effect of the sustained-action brake (5) during a braking process and storing this deviation in the correction function (Kv), wherein this deviation is compensated by the correction function (Kv).

5. Method according to one of the preceding claims, **characterized in that** the correction function (Kv) is interpolated from a number (n) of correction factors (Kf).

6. Method according to one of the preceding claims, **characterized in that** at least one state variable is included for the determination of the service-brake setpoint deceleration value (zRB_soll), said state variable being selected from the group which contains:
a brake temperature (T), a brake pressure (p), an angular speed (ω), a coefficient of friction (µ) of the friction brake (4).

7. Method according to one of the preceding claims, **characterized in that** the vehicle setpoint deceleration value (z soll) is predefined by actuation of a brake pedal (1) by the driver of the vehicle (6) and/or by a control system (2) for the automatic actuation of the brake system.

8. Method according to one of the preceding claims, **characterized in that** in a service brake control device (15) a service-brake setpoint pressure (pRB soll) is determined from the service-brake setpoint deceleration value (zRB soll) as a function of a vehicle deceleration control operation and/or a differential slip control operation and is transmitted to the at least one service brake (4).

## Revendications

1. Procédé pour la commande d'un système de freinage électronique dans un véhicule (6), dans lequel le système de freinage comporte au moins un frein de service (4) et un frein continu (5), comprenant au moins les étapes suivantes :
- détermination d'une valeur de décélération de consigne de véhicule (z_soll) (St1),
- commande du frein continu (5) par un signal (S4) de frein continu (St2.1) et dudit au moins un frein de service (4) par un signal (S3) de frein de service (St2.2) en fonction de la valeur de décélération de consigne (z soll) du véhicule,
- lecture d'un signal (S5) de couple instantané de frein continu du frein continu (5) (St3) et détermination d'un signal de départ (S6),
**caractérisé en ce qu'**un signal de correction (S6_korr) (St4) est déterminé à partir du signal de départ (S6) et **en ce qu'**une valeur de décélération de consigne de frein de service (zRB soll) est déterminée à partir du signal de correction (S6_korr) et **en ce que** ledit au moins un frein de service (4) est commandé (St5) par l'intermédiaire du signal (S3) de frein de service avec la valeur de décélération de consigne de frein de service (zRB_soll),
dans lequel le signal de correction (S6 korr) est déterminé à partir du signal de départ (S6) et d'une fonction de correction (Kv),
dans lequel le signal de départ (S6) transmet une valeur de décélération instantanée de frein continu (zDBI_ist) ou une valeur de couple instantanée de frein continu (MDBI ist), et
le signal de correction (S6 korr) transmet une valeur de décélération instantanée de frein continu corrigé (zDBI_ist_korr) ou une valeur de couple instantanée de frein continu corrigée (MDBI ist korr), et
dans lequel la fonction de correction (Kv) dépend d'une vitesse de véhicule (v_Fzg) et/ou d'un facteur d'écart (K) qui contient la différence entre la valeur de décélération de consigne de véhicule (z soll) et la valeur de décélération instantanée de véhicule (z_ist).

2. Procédé selon la revendication 1, **caractérisé en ce que** le signal de correction (S6 korr) est déterminé à partir du signal de départ (S6) par une multiplication de la fonction de correction (Kv) par la valeur de décélération instantanée de frein continu (zDBI_ist) ou par la valeur de couple instantanée de frein continu (MDBI_ist).

3. Procédé selon la revendication 2, **caractérisé en ce qu'**au moins une masse de véhicule (m_Fzg) et/ou des rapports de transmission (i) sont pris en compte pour la détermination de la valeur de décélération instantanée de frein continu corrigée (zDBI ist korr) ou de la valeur de couple instantanée de frein continu (MDBI_ist_korr).

4. Procédé selon l'une des revendications précédentes, **caractérisé en ce que** la fonction de correction (Kv) est déterminée à partir d'une valeur de décélération instantanée de véhicule (z_ist) et de la valeur de décélération de consigne de véhicule (z_soll) du véhicule (6), en déterminant une seule fois et/ou en continu un écart affectant l'effet de freinage du frein continu (5) lors d'un processus de freinage et en stockant ledit écart dans la fonction de correction (Kv), dans lequel ledit écart est compensé par la fonction de correction (Kv).

5. Procédé selon l'une des revendications précédentes, **caractérisé en ce que** la fonction de correction (Kv) est interpolée à partir d'un certain nombre (n) de facteurs de correction (Kf).

6. Procédé selon l'une des revendications précédentes, **caractérisé en ce qu'**au moins une grandeur d'état choisie dans le groupe suivant est prise en compte pour la détermination de la valeur de décélération de consigne de frein de service (zRB_soll) :
une température des freins (T), une pression de freinage (p), une vitesse angulaire (ω), un coefficient de frottement (µ) de freins à friction (4).

7. Procédé selon l'une des revendications précédentes, **caractérisé en ce que** la valeur de décélération de consigne de véhicule (z soll) est prédéterminée par le conducteur du véhicule (6) par actionnement d'une pédale de frein (1) et/ou par un système de régulation (2) pour la commande automatique du système de freinage.

8. Procédé selon l'une des revendications précédentes, **caractérisé en ce que**, dans un dispositif de commande de frein de service (15), une pression de consigne de frein de service (pRB soll) est déterminée à partir de la valeur de décélération de consigne de frein de service (zRB soll) en fonction d'une régulation de décélération de véhicule et/ou d'une régulation de patinage différentiel et est transmise audit au moins un frein de service (4).
